# EUROPEAN PATENT SPECIFICATION

(11) **EP 0 755 810 B1**
(45) Date of publication and mention of the grant of the patent: **24.05.2000**
(21) Application number: 96305286.5
(22) Date of filing: 18.07.1996
(51) Int. Cl.: B60C 13/00

(54) **Pneumatic tires**
Luftreifen
Bandages pneumatiques

(30) Priority: 26.07.1995 JP 18998495
(43) Date of publication of application: 29.01.1997
(73) Proprietor: Bridgestone Corporation, Tokyo (JP)
(72) Inventor: Itabashi, Shinobu, Kodaira City, Tokyo (JP)
(74) Representative: Whalley, Kevin

(56) References cited:
- EP-A- 0 522 781
- FR-A- 2 661 871

## Description

This invention relates to pneumatic tires, and more particularly to a pneumatic tire having an annular ornamentation comprising many fine ridges formed on a surface of a sidewall at small intervals in the circumferential direction thereof.

A pneumatic tire is a doughnut or torus having a toroidal shape at radial section. However, such a tire is not manufactured as a torus from the beginning. In general, the pneumatic tire is manufactured by turning a sheet for a carcass ply on a forming drum for the tire to join a turning end of the sheet on a turning start end thereof, attaching structural members such as chafer, breaker or belt, tread and the like thereonto to form a green tire, and vulcanizing the green tire in a mold made from steel, aluminium or the like through heating under a given pressure for a given time.

As a result, the sidewall in the tire after the vulcanization has a degree of ruggedness at a position corresponding to the joint portion of the sheet for the carcass ply. This ruggedness of the sidewall is not a major drawback in view of tire performances and durability, but may give concern to a customer because the ruggedness of the sidewall becomes relatively remarkable in radial tires for passenger cars including a single carcass ply.

In the pneumatic tire, it is generally known that the carcass ply is wound around each of a pair of bead cores from the inside of the tire toward the outside to form a turnup portion and the turnup end of the carcass ply is positioned in the sidewall, and the rubber for the sidewall is arranged on the outside of the turnup portion. As the thickness of the sidewall rubber becomes thinner in accordance with demand for reducing tire weight and the like, the turnup end of the carcass ply may become as relatively conspicuous as the ruggedness of the sidewall.

In order to put apply a trade mark, tire information and the like consisting of many characters, numerals, signs, figures and the like formed on the sidewall of the tire, it has long been known that an annular ornamentation comprising a plurality of fine ridges arranged at the same height and at equal intervals in the circumferential direction may be formed on the surface of the sidewall and these characters, figures and the like are laid out in a restricted space of the ornamentation.

The present inventor has considered that the fine ridges formed for applying the trade mark, tire information or the like may be formed over a wide range of the sidewall in order to make unobtrusive the ruggedness created in the sidewall of the tire. Although many fine ridges have actually been formed over the wide range of the sidewall, the expected effect of making the ruggedness of the sidewall unobtrusive could not been obtained.

In order to form the ridges on the surface of the sidewall in the tire, grooves corresponding to the ridges have to be formed in an inner surface of a mold. In this case, an edge of a cutting tool used for the formation of the grooves gradually wears during the application to the mold and hence there is caused a difference in the sectional shape between the first formed groove and the last formed groove to form a non-uniform pattern of the grooves over the inner peripheral surface of the mold, which brings about an undesirable appearance of the sidewall.

It is, therefore, an object of the invention to solve the aforementioned problems of the conventional technique and to provide a pneumatic tire provided at its sidewall with many ridges for making unobtrusive not only the ruggedness created in the sidewall of the tire but also the poor appearance of the tire based on the difference in the sectional shape of the grooves between the first formed groove and the last formed groove due to the wearing of the cutting tool edge in the formation of grooves on the inner surface of the mold.

According to the invention, there is provided a pneumatic tire provided on its sidewall surface with an annular ornamentation comprising fine ridges arranged at a height of about 0.3-2 mm and at an interval of about 0.2-5 mm in the circumferential direction of the tire, wherein (1) said ornamentation comprises an outer region, a middle region and an inner region in a radial direction of the tire; (2) each of said ridges curvedly extends in both the radially outer and inner regions of the ornamentation; (3) a radius center of curvature of a ridge segment curvedly extending in the radially outer region is opposite to a radius center of curvature of a ridge segment curvedly extending in the radially inner region with respect to the ridge comprised of said ridge segments; and (4) said ridge extends in S-shaped form in such a manner that an inflection point between a curve of the ridge segment in the radially outer region and a curve of the ridge segment in the radially inner region is existent in the radially middle region of the ornamentation.

In the pneumatic tire according to the invention having the above structure, the ridge pattern is not a monotonous design comprised only of straight lines or curves as used in the conventional technique but is a combination of straight ridge segments and curved ridge segments as mentioned above, so that the balance of light and shade and the intensity of reflected light are delicately changed, whereby the ruggedness created in the sidewall of the tire and the poor appearance of the tire based on the difference in the sectional shape of the grooves between the first formed groove and the last formed groove due to the wearing of cutting tool edge in the formation of grooves on the inner surface of the mold are made unobtrusive.

In a preferable embodiment of the invention, a radius of curvature of the ridge segment curvedly extending in the radially outer region and a radius of curvature of the ridge segment curvedly extending in the radially inner region are considerably higher than a radius of curvature of a ridge segment curvedly extending in the radially middle region of the ornamentation.

In another preferable embodiment of the invention, the radially middle region is located substantially in a central zone of the ornamentation in the radial direction thereof.

In a further preferable embodiment of the invention, the width of the radially middle region is 20-50% of the full width of the ornamentation in the radial direction thereof.

Moreover, the ridges may have the same height or two or more different heights.

The invention will be further described with reference to the accompanying drawings, wherein:
Fig. 1 is a partial front view of an embodiment of the ornamentation used in a pneumatic tire according to the invention;
Fig. 2 is a partial side view of an embodiment of a pneumatic tire according to the invention provided with another embodiment of the annular ornamentation;
Fig. 3 is a partial front view of an embodiment of the ornamentation used in a conventional tire; and
Fig. 4 is a partial front view of another embodiment of the ornamentation used in a conventional tire.

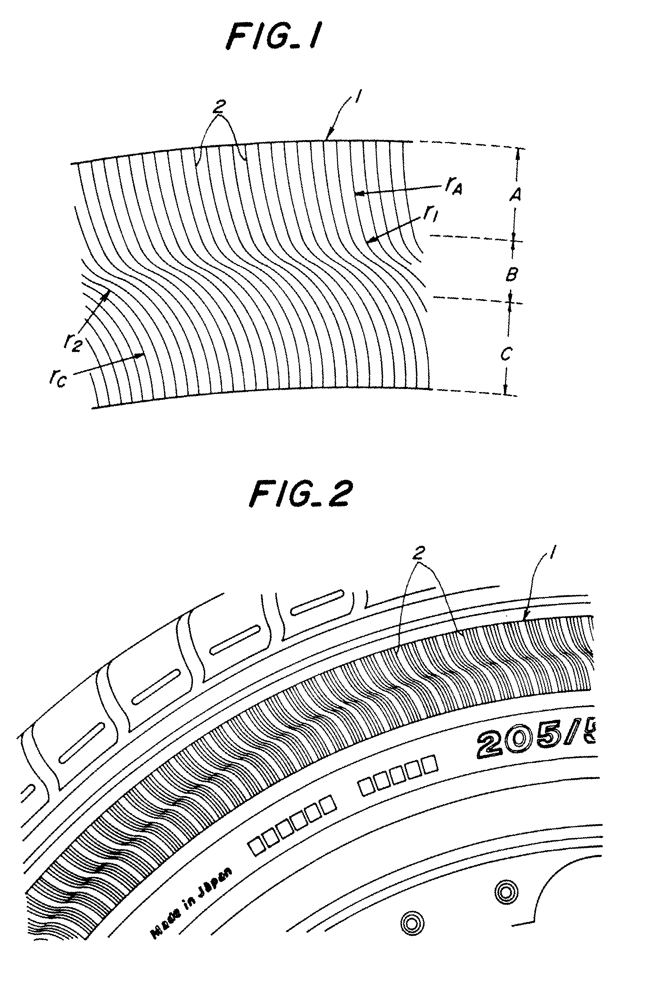

In Fig. 1 is partially shown an annular ornamentation 1 comprising a plurality of fine ridges 2 arranged on a surface of a sidewall at small intervals in the circumferential direction thereof in a first embodiment of a pneumatic tire according to the invention (Example 1).

That is, many fine ridges 2 each having a height of 0.6 mm are arranged on the surface of the sidewall at an interval of 0.25 mm in the circumferential direction of the annular ornamentation 1.

As shown in Fig. 1, the ornamentation 1 consists of an outer region A, a middle region B and an inner region C in the radial direction of the tire, and each of the ridges 2 curvedly extends in the radially outer region A and the radially inner region C of the ornamentation 1.

A center of radius of curvature r_{A} of a ridge segment curvedly extending in the radially outer region A is opposite to a center of radius of curvature r_{C} of a ridge segment curvedly extending in the radially inner region C with respect to the ridge 2 comprised of these ridge segments.

The ridge 2 extends in S-shaped form in such a manner that an inflection point between a curve of the ridge segment in the radially outer region A and a curve of the ridge segment in the radially inner region C is existent in the radially middle region B of the ornamentation 1.

The radius of curvature r_{A} of the ridge segment curvedly extending in the radially outer region A is 61 mm, and the radius of curvature rc of the ridge segment curvedly extending in the radially inner region C is 32 mm, which are considerably larger than radii of curvature r₁ = 7 mm and r₂ = 12 mm of a ridge segment curvedly extending in the radially middle region B of the ornamentation 1.

As shown in Fig. 1, the radially middle region B is located substantially in a central zone of the ornamentation 1 in the radial direction and has a width 10 mm corresponding to 24% of a full width (41 mm) of the ornamentation 1 in the radial direction.

In Fig. 2 is partly shown a second embodiment of a pneumatic tire according to the invention (Example 2) provided on the surface of the sidewall with an annular ornamentation 1 comprising many fine ridges 2 arranged at small intervals in the circumferential direction of the tire.

The tire of Fig. 2 is substantially the same as the tire of Fig. 1 except that many groups each consisting of five ridges 2 arranged at an interval of 0.25 mm in the circumferential direction are arranged at an interval of 0.75 mm between adjacent groups in the circumferential direction of the ornamentation 1.

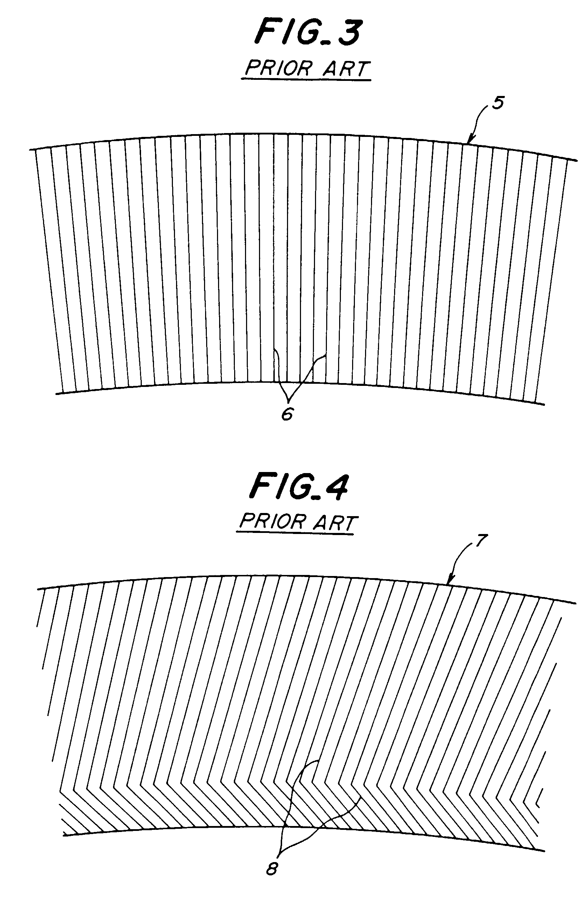

In Fig. 3 is partly shown a first embodiment of a conventional tire (Conventional Example 1) provided on the surface of the sidewall with an annular ornamentation 5 comprising many fine ridges 6 arranged at small intervals (0.25 mm) in the circumferential direction, in which each of these ridges 6 extends straight at an angle of 0 degree with respect to a meridional line of the tire over the full circumference of the ornamentation 5.

In Fig. 4 is partly shown a second embodiment of a conventional tire (Conventional Example 2) provided on the surface of the sidewall with an annular ornamentation 7 comprising many fine ridges 8 at small intervals (0.25 mm) in the circumferential direction, in which each of these ridges 8 extends in form of a polygonal line over the full circumference of the ornamentation 7 and consists of a straight line segment extending at an angle of 18 degrees with respect to the meridional line upward to the right in the radially outer region and a straight line segment extending at an angle of 45 degrees with respect to the meridional line upward to the left in the radially inner region.

The degree of ruggedness created in the sidewall of the tire is visually evaluated with respect to these tires to obtain results as shown in Table 1. The evaluated result is represented by an index value on the basis that the Conventional Example 1 is 100, in which the larger the index value, the better the visibility.

**Table 1**

| | Conventional Example 1 | Conventional Example 2 | Example 1 | Example 2 |
|---|---|---|---|---|
| Ruggedness of sidewall | 100 | 120 | 130 | 140 |
| Poor appearance | 100 | 110 | 120 | 130 |

As seen from Table 1, in the pneumatic tires according to the invention, the ruggedness created in the sidewall of the tire is made relatively unobtrusive, while the occurrence of poor appearance in the tire based on the difference in the sectional shape of the grooves between the first formed groove and the last formed groove due to the wearing of cutting tool edge in the formation of grooves on the inner surface of the mold is considerably controlled.

## Claims

1. A pneumatic tire provided on its sidewall surface with an annular ornamentation (1) comprising fine ridges (2) arranged at a height of about 0.3-2 mm and at an interval of about 0.2-5 mm in the circumferential direction of the tire, characterized in that said ornamentation (1) comprises an outer region (A), a middle region (B) and an inner region (C) in a radial direction of the tire; in that each of said ridges (2) curvedly extends in both the radially outer and inner regions (A, C) of the ornamentation; in that a radius center of curvature (r_{A}) of a ridge segment curvedly extending in the radially outer region (A) is opposite to a radius center of curvature (r_{C}) of a ridge segment curvedly extending in the radially inner region (C) with respect to the ridge (2) comprised of said ridge segments; and in that said ridge (2) extends in S-shaped form in such a manner that an inflection point between a curve of the ridge segment in the radially outer region (A) and a curve of the ridge segment in the radially inner region (C) is existent in the radially middle region (B) of the ornamentation (1).

2. A pneumatic tire as claimed in claim 1, characterized in that a radius of curvature (r_{A}) of the ridge segment curvedly extending in the radially outer region (A) and a radius of curvature (r_{C}) of the ridge segment curvedly extending in the radially inner region (C) are considerably higher than a radius of curvature (r₁, r₂) of a ridge segment curvedly extending in the radially middle region (B) of the ornamentation (1).

3. A pneumatic tire as claimed in claim 1 or 2, characterized in that the radially middle region (B) is located substantially in a central zone of the ornamentation (1) in the radial direction thereof.

4. A pneumatic tire as claimed in any of claims 1 to 3, characterized in that the width of the radially middle region (B) is 20-50% of the full width of the ornamentation (1) in the radial direction thereof.

## Patentansprüche

1. Luftreifen, der an seiner Seitenwandfläche mit einer ringförmigen Verzierung (1) versehen ist, die feine Rippen (2) aufweist, die in einer Höhe von etwa 0,3 bis 2 mm und mit einem Abstand von etwa 0,2 bis 5 mm in der Umfangsrichtung des Reifens angeordnet sind, dadurch gekennzeichnet, daß die Verzierung (1) aufweist: einen äußeren Bereich (A); einen mittleren Bereich (B); und einen inneren Bereich (C) in einer radialen Richtung des Reifens; daß sich jede der Rippen (2) gebogen in sowohl dem radial äußeren als auch inneren Bereich (A, C) der Verzierung erstreckt; daß ein Krümmungsradiusmittelpunkt (r_{A}) eines Rippensegmentes, das sich gebogen im radial äußeren Bereich (A) erstreckt, einem Krümmungsradiusmittelpunkt (r_{C}) eines Rippensegmentes entgegengesetzt ist, das sich gebogen im radial inneren Bereich (C) mit Bezugnahme auf die Rippe (2) erstreckt, die die Rippensegmente aufweist; und daß sich die Rippe (2) in einer S-förmigen Form so erstreckt, daß ein Wendepunkt zwischen einer Kurve des Rippensegmentes im radial äußeren Bereich (A) und einer Kurve des Rippensegmentes im radial inneren Bereich (C) im radial mittleren Bereich (B) der Verzierung (1) vorhanden ist.

2. Luftreifen nach Anspruch 1, dadurch gekennzeichnet, daß ein Krümmungsradius (r_{A}) des Rippensegmentes, das sich gebogen in den radial äußeren Bereich (A) erstreckt, und ein Krümmungsradius (r_{C}) des Rippensegmentes, das sich gebogen in den radial inneren Bereich (C) erstreckt, beträchtlich größer sind als ein Krümmungsradius (r₁, r₂) eines Rippensegmentes, das sich gebogen in den radial mittleren Bereich (B) der Verzierung (1) erstreckt.

3. Luftreifen nach Anspruch 1 oder 2, dadurch gekennzeichnet, daß der radial mittlere Bereich (B) im wesentlichen in einer mittleren Zone der Verzierung (1) in deren radialen Richtung angeordnet ist.

4. Luftreifen nach einem der Ansprüche 1 bis 3, dadurch gekennzeichnet, daß die Breite des radial mittleren Bereiches (B) 20 bis 50% der vollen Breite der Verzierung (1) in deren radialen Richtung beträgt.

## Revendications

1. Bandage pneumatique comportant sur sa surface de flanc une décoration annulaire (1) comprenant de fines nervures (2), agencées au niveau d'une hauteur comprise entre 0,3 et 2 mm et à un intervalle compris entre 0,2 et 5 mm dans la direction circonférentielle du bandage pneumatique, caractérisé en ce que ladite décoration (1) comprend une région externe (A), une région médiane (B) et une région interne (C), dans une direction radiale du bandage pneumatique ; en ce que chacune desdites nervures (2) s'étend par courbure dans les régions radialement externe et interne (A, C) de la décoration ; en ce qu'un centre du rayon de courbure (r_{A}) d'un segment de nervure s'étendant par courbure dans la région radialement externe (A) est opposé à un centre du rayon de courbure (r_{C}) d'un segment de nervure s'étendant par courbure dans la région radialement interne (C) par rapport à la nervure (2) composée desdits segments de nervure ; et en ce que ladite nervure (2) s'étend sous une forme en S, de sorte qu'un point d'inflexion entre une courbure du segment de nervure dans la région radialement externe (A) et une courbe du segment de nervure dans la région radialement interne (C) est établi dans la région radialement médiane (B) de la décoration (1).

2. Bandage pneumatique selon la revendication 1, caractérisé en ce qu'un rayon de courbure (r_{A}) du segment de nervure s'étendant par courbure dans la région radialement externe (A) et un rayon de courbure (r_{C}) du segment de nervure s'étendant par courbure dans la région radialement interne (C) sont nettement plus grands qu'un rayon de courbure (r₁, r₂) d'un segment de nervure s'étendant par courbure dans la région radialement médiane (B) de la décoration (1).

3. Bandage pneumatique selon les revendications 1 ou 2, caractérisé en ce que la région radialement médiane (B) est agencée pratiquement dans une zone centrale de la décoration (2), dans la direction radiale correspondante.

4. Bandage pneumatique selon l'une quelconque des revendications 1 à 3, caractérisé en ce que la largeur de la région radialement médiane (B) représente 20 à 50% de la largeur totale de la décoration (1), dans la direction radiale correspondante.
